# EUROPEAN PATENT SPECIFICATION

(11) **EP 2 081 175 B1**
(45) Date of publication and mention of the grant of the patent: **11.01.2017**
(21) Application number: 09150725.1
(22) Date of filing: 16.01.2009
(51) Int. Cl.: G09G 3/32

(54) **Organic light emitting display and driving method thereof**
Organische lichtemittierende Anzeige und Verfahren zu ihrer Ansteuerung
Affichage électroluminescent organique et son procédé de commande

(30) Priority: 18.01.2008 KR 20080005616
(43) Date of publication of application: 22.07.2009
(73) Proprietor: Samsung Display Co., Ltd., Gyeonggi-do (KR); IUCF-HYU (Industry-University Cooperation Foundation Hanyang University), Seongdong-gu, Seoul (KR)
(72) Inventor: Kwon, Oh-Kyong, Seoul (KR)
(74) Representative: Walaski, Jan Filip

(56) References cited:
- US-A1- 2005 030 267
- Analog Devices: "AD7416 10-bit Digital Temperature Sensor"[Online] 26 August 2004 (2004-08-26), XP002601746 Retrieved from the Internet: URL:http://www.chipcatalog.com/Analog/AD74 16.htm> [retrieved on 2010-09-22]

## Description

The present invention relates to an organic light emitting display and a driving method thereof, and more particularly, to an organic light emitting display capable of displaying an image having uniform luminance regardless of the degradation of the organic light emitting diodes by compensating for temperature effects, and a driving method thereof.

In recent years, a variety of flat panel displays having reduced weight and volume, in comparison to the cathode ray tube (CRT) have been developed. The flat panel displays include liquid crystal displays (LCD), field emission displays (FED), plasma display panels (PDP), organic light emitting displays (OLED), etc.

Among the flat panel displays, the organic light emitting display uses an organic light emitting diode to display an image, the organic light emitting diode generates the light by recombining electrons and holes. Such an organic light emitting display has a rapid response time and is also driven by a low amount of power.

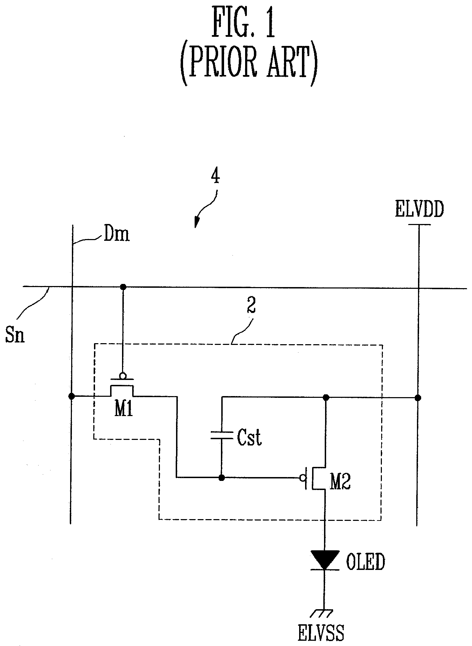

FIG. 1 is a circuit diagram showing a pixel of a conventional organic light emitting display.

Referring to FIG. 1, the pixel 4 of the conventional organic light emitting display includes an organic light emitting diode (OLED) and a pixel circuit 2 coupled to a data line (Dm) and a scan line (Sn) to control the organic light emitting diode (OLED).

An anode electrode of the organic light emitting diode (OLED) is coupled to the pixel circuit 2, and a cathode electrode of the organic light emitting diode (OLED) is coupled to a second power source (ELVSS). Such an organic light emitting diode (OLED) generates light having a predetermined luminance using an electric current supplied from the pixel circuit 2. When a scan signal is supplied to the scan line (Sn), the pixel circuit 2 controls the current capacity supplied to the organic light emitting diode (OLED) which corresponds to a data signal supplied to the data line (Dm).

For this purpose, the pixel circuit 2 includes first and second transistors (M1 and M2) and a storage capacitor (Cst). The second transistor (M2) is coupled between a first power source (ELVDD) and the organic light emitting diode (OLED), and the first transistor (M1) is coupled between the second transistor (M2), the data line (Dm) and the scan line (Sn). The storage capacitor (Cst) is coupled between a gate electrode of the second transistor (M2) and a first electrode of the second transistor (M2).

The gate electrode of the first transistor (M1) is coupled to the scan line (Sn), and the first electrode of the first transistor (M1) is coupled to the data line (Dm). A second electrode of the first transistor (M1) is coupled to one side terminal of the storage capacitor (Cst).

Here, the first electrode is set to be one of a source electrode and a drain electrode, and the second electrode is set to the other electrode that is different from the first electrode. For example, if the first electrode is set to be a source electrode, the second electrode is set to be a drain electrode. The first transistor (M1) coupled to the scan line (Sn) and the data line (Dm) is turned on when a scan signal is supplied from the scan line (Sn), and supplies a data signal supplied from the data line (Dm) to the storage capacitor (Cst). At this time, the storage capacitor (Cst) is charged with a voltage corresponding to the data signal.

A gate electrode of the second transistor (M2) is coupled to one side terminal of the storage capacitor (Cst), and the first electrode of the second transistor (M2) is coupled to the other side terminal of the storage capacitor (Cst) and the first power source (ELVDD). The second electrode of the second transistor (M2) is coupled to an anode electrode of the organic light emitting diode (OLED). The second transistor (M2) controls the current capacity that flows from the first power source (ELVDD) to the second power source (ELVSS) via the organic light emitting diode (OLED) which corresponds to the voltage value stored in the storage capacitor (Cst). Therefore, the organic light emitting diode (OLED) generates light corresponding to the current capacity supplied from the second transistor (M2).

However, in the conventional organic light emitting display it is impossible to display an image having a desired luminance due to the efficiency change caused by the degradation of the organic light emitting diode (OLED). In fact, the organic light emitting diode (OLED) is degraded with time, and therefore light having gradually decreasing luminance is generated in response to a same data signal. Also, the degradation level of the organic light emitting diode may vary according to temperature, and therefore the temperature effects should be considered so as to exactly compensate for the degradation level of the organic light emitting diode. Accordingly, an aspect of the present invention is designed to solve such drawbacks of the prior art, and therefore provides an organic light emitting display that includes a temperature sensor and is capable of displaying an image having uniform luminance regardless of the degradation of organic light emitting diodes caused by temperature effects. This can be achieved by providing correction data to compensate for the degradation of organic light emitting diodes caused by temperature changes in a panel by obtaining information of the temperature through a temperature sensor, and a driving method thereof. US2005/030267 discloses an OLED display in which OLED operating parameters are compensated.

According to the invention, there is provided an organic light emitting display according to claim 1 and a method of driving an organic light emitting display according to claim 3.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a circuit diagram showing a conventional pixel;
FIG. 2 is a block diagram showing an organic light emitting display according to one exemplary embodiment of the present invention;
FIG. 3 is a circuit diagram showing one exemplary embodiment of the pixel as shown in FIG. 2;
FIG. 4 is a diagram schematically showing a sensing unit as shown in FIG. 2;
FIG. 5 is a diagram schematically showing an internal configuration of a second ADC as shown in FIG. 2;
FIG. 6 is a diagram schematically showing an internal configuration of a conversion unit as shown in FIG. 2; and
FIG. 7 is a block diagram showing one exemplary embodiment of a data driver as shown in FIG. 2.

Reference will now be made in detail to the embodiments of the present invention, examples of which are illustrated in the accompanying drawings, wherein like reference numerals refer to the like elements throughout. The embodiments are described below in order to explain the present invention by referring to the figures.

Hereinafter, certain exemplary embodiments according to the present invention will be described with reference to the accompanying drawings. Here, when a first element is described as being coupled to a second element, the first element may be not only directly coupled to the second element but may also be indirectly coupled to the second element via a third element. Further, some of the elements that are not essential to the complete understanding of the invention are omitted for clarity. Also, like reference numerals refer to like elements throughout.

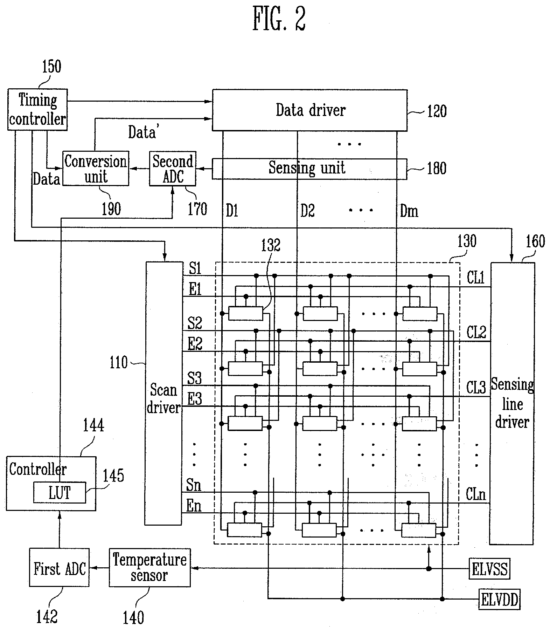

FIG. 2 is a block diagram showing an organic light emitting display according to one exemplary embodiment of the present invention.

Referring to FIG. 2, the organic light emitting display according to one exemplary embodiment of the present invention includes a pixel unit 130, a scan driver 110, a sense line driver 160, a data driver 120, and a timing controller 150. Also, the organic light emitting display according to one exemplary embodiment of the present invention further includes a temperature sensor 140, a first analog/digital converter (hereinafter, referred to as a 'first ADC') 142, a controller 144, a sensing unit 180, a second ADC 170, and a conversion unit 190.

In the configuration as described above, the exemplary embodiment of the present invention is characterized in that it provides correction data for compensating for the degradation of organic light emitting diodes caused by changes in temperature in a panel. Information of the degradation caused by the effects of the temperature is measured in the temperature sensor 140.

The pixel unit 130 includes pixels 132 arranged at intersecting points of scan lines (S1 to Sn), light emitting control lines (E1 to En), sense lines (CL1 to CLn) and data lines (D1 to Dm). The pixels 132 are connected to a first power source (ELVDD) and a second power source (ELVSS). The pixels 132 control the current capacity which corresponds to a data signal, the current being supplied from the first power source (ELVDD) to the second power source (ELVSS) via the organic light emitting diodes. The light having a predetermined luminance is generated in the organic light emitting diodes.

The scan driver 110 supplies a scan signal to the scan lines (S1 to Sn) under the control of the timing controller 150. Also, the scan driver 110 supplies a light emitting control signal to the light emitting control lines (E1 to En) under the control of the timing controller 150. Therefore, the scan driver 110 drives the scan lines (S1 to Sn) and the light emitting control lines (E1 to En).

The sense line driver 160 drives the sense lines (CL1 to CLn) by supplying a sensing signal to the sense lines (CL1 to CLn) under the control of the timing controller 150.

The data driver 120 drives the data lines (D1 to Dm) by supplying a data signal to the data lines (D1 to Dm) also under the control of the timing controller 150.

The temperature sensor 140 is coupled to the second power source (ELVSS), and functions to measure a temperature of the pixel unit 130.

Also, the first ADC 142 functions to convert information of the temperature measured in the temperature sensor 140 into a digital value, and the information of the temperature converted into the digital value is input into the controller 144.

The controller 144 functions to receive a digital value output from the first ADC 142 and outputs a control signal corresponding to the received digital value. Here, the controller 144 includes a look-up table (LUT) 145.

More particularly, the controller 144 selects a predetermined control signal, which corresponds to the information of the received temperature, out of a plurality of control signals previously stored in the LUT 145, and outputs the selected control signal. The control signal output from the controller 144 is input into the second ADC 170.

The sensing unit 180 obtains information of the degradation level of the organic light emitting diode included in each of the pixels 132. For this purpose, the sensing unit 180 supplies a predetermined electric current to the organic light emitting diode in each of the pixels 132, and measures voltages of the respective organic light emitting diodes generated by the electric current. Therefore, the sensing unit 180 obtains the degradation level of the organic light emitting diode.

That is to say, the degradation level of the organic light emitting diodes may be obtained through the voltage of the organic light emitting diode corresponding to the predetermined electric current. The voltage of the organic light emitting diode is input into the second ADC 170.

However, the voltage of the organic light emitting diode, which corresponds to the degradation level, e.g., a predetermined electric current of the organic light emitting diode, may be varied according to the changes in temperature. Therefore, the effects of temperature should be considered so as to exactly compensate for the degradation level of the organic light emitting diode.

Here, the extraction of the degradation information of the organic light emitting diodes is preferably carried out for a non-display period prior to displaying an image after a power source is applied to the organic light emitting display. That is, the degradation information of the organic light emitting diodes may be obtained whenever the power source is applied to the organic light emitting display.

The second ADC 170 receives a control signal output from the controller 144 and the degradation information of the organic light emitting diode output from the sensing unit 180, i.e., a voltage of the organic light emitting diode corresponding to a predetermined electric current. Accordingly, the second ADC 170 generates a digital value corresponding to the information on the degradation of the organic light emitting diode that is varied due to temperature.

That is, the second ADC 170 may generate a digital value corresponding to the information on the degradation of the organic light emitting diode, which is varied according to temperature, by receiving a control signal provided by the controller 144 in consideration of the information on the temperature measured in the temperature sensor 140 and by receiving information of the degradation of the organic light emitting diode output by the sensing unit 180.

Accordingly, the conversion unit 190 converts input data (Data) from the timing controller 150 into a correction data (Data') so as to display an image having uniform luminance regardless of the changes in the degradation level of the organic light emitting diode due to temperature effects, by using the digital value output from the second ADC.

The timing controller 150 controls the data driver 120, the scan driver 110, and the sense line driver 160.

Also, the data (Data) which is output by the timing controller 150 is converted into the correction data (Data') by the conversion unit 190 by using the digital value output from the second ADC so as to compensate for the degradation of the organic light emitting diodes, and then supplied to the data driver 120. Then, the data driver 120 generates a data signal using the converted correction data (Data'), and supplies the generated data signal to the pixels 132.

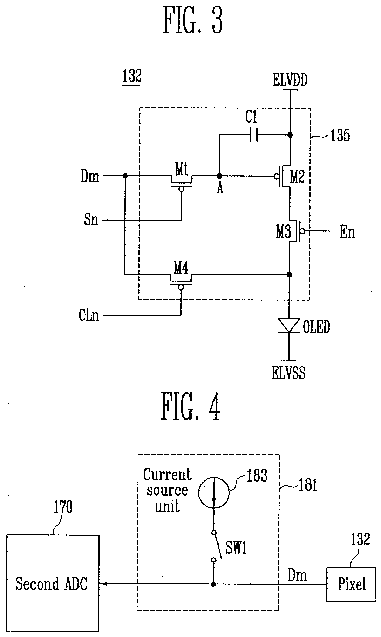

FIG. 3 shows one exemplary embodiment of the pixel shown in FIG. 2. For convenience of description the pixel is shown coupled to an mth data line (Dm) and an nth scan line (Sn).

Referring to FIG. 3, the pixel 132 according to one exemplary embodiment of the present invention includes an organic light emitting diode (OLED) and a pixel circuit 135 to supply an electric current to the organic light emitting diode (OLED).

An anode electrode of the light emitting diode (OLED) is coupled to the pixel circuit 135, and a cathode electrode is coupled to the second power source (ELVSS). Such an organic light emitting diode (OLED) generates light having a predetermined luminance to correspond to an electric current supplied from the pixel circuit 135.

The pixel circuit 135 receives a data signal supplied to the data line (Dm) when a scan signal is supplied to the scan line (Sn). Also, the pixel circuit 135 supplies the information of the degradation of the organic light emitting diode (OLED) to the sensing unit 180 when a sense signal is supplied to the sense line (CLn). For this purpose, the pixel circuit 135 includes 4 transistors (M1 to M4) and one capacitor (C1).

A gate electrode of the first transistor (M1) is coupled to the scan line (Sn), and a first electrode is coupled to the data line (Dm). A second electrode of the first transistor (M1) is coupled to a first node (A).

A gate electrode of the second transistor (M2) is coupled to the first node (A), and a first electrode is coupled to the first power source (ELVDD).

Also, a capacitor (C1) is coupled between the first power source (ELVDD) and the first node (A).

The second transistor (M2) controls the current capacity to correspond to the voltage value stored in the capacitor (C1), the current flowing from the first power source (ELVDD) to the second power source (ELVSS) via the organic light emitting diode (OLED). At this time, the organic light emitting diode (OLED) generates light corresponding to the current capacity supplied from the second transistor (M2).

A gate electrode of the third transistor (M3) is coupled to the light emitting control line (En), and a first electrode of the third transistor (M3) is coupled to the second electrode of the second transistor (M2). A second electrode of the third transistor (M3) is coupled to the organic light emitting diode (OLED). The third transistor (M3) is turned off when a light emitting control signal is supplied to the light emitting control line (En) (at a high level), and turned on when a light emitting control signal is supplied to the light emitting control line (En) (at a low level). Here, the light emitting control signal is supplied to the capacitor (C1) for a period (a programming period) to charge a voltage corresponding to the data signal and a period (an OLED degradation sensing period) for sensing information on the degradation of the organic light emitting diode (OLED).

A gate electrode of the fourth transistor (M4) is coupled to the sense line (CLn), and a first electrode is coupled to an anode electrode of the organic light emitting diode (OLED). Also, a second electrode of the fourth transistor (M4) is coupled to the data line (Dm). Such a fourth transistor (M4) is turned on when a sense signal is supplied to the sense line (CLn), and turned off in all other cases. Here, the sense signal is supplied for a period (an OLED degradation sensing period) for sensing information on the degradation of the organic light emitting diode (OLED).

FIG. 4 is a diagram schematically showing a sensing unit as shown in FIG. 2.

Referring to FIG. 4, each of the channels in the sensing unit 180 includes a sensing circuit 181, and the sensing circuit 181 includes a current source unit 183 and a switching element (SW1) coupled to the current source unit 183.

The first current source unit 183 supplies a first electric current (Iref) to the pixels 132 when a switching element (SW1) is turned on. That is to say, the first electric current is supplied to the organic light emitting diodes (OLED) included in the pixels 132, and a predetermined voltage generated in the organic light emitting diode of each of the pixels 132 is supplied to the second ADC 170 when the first electric current is supplied to the pixels 132. At this time, the predetermined voltage (a first voltage) generated by the first current source unit 183 has information on the degradation level of the organic light emitting diodes (OLED).

An internal resistance value of the organic light emitting diode (OLED) is changed according to the degradation of the organic light emitting diode (OLED). That is, a voltage value is changed, the voltage value being generated by the electric current that is applied to correspond to the degradation of the organic light emitting diode. Therefore, it is possible to obtain the degradation information of the organic light emitting diode (OLED) using the changed voltage value.

Meanwhile, an electric current value of the first electric current is set so that a predetermined voltage can be applied to the organic light emitting diode (OLED) within a predetermined time. For example, the first electric current may be set to a value (Imax) of an electric current that should flow in the organic light emitting diode (OLED) when the pixel 132 is allowed to emit the light with the maximum luminance.

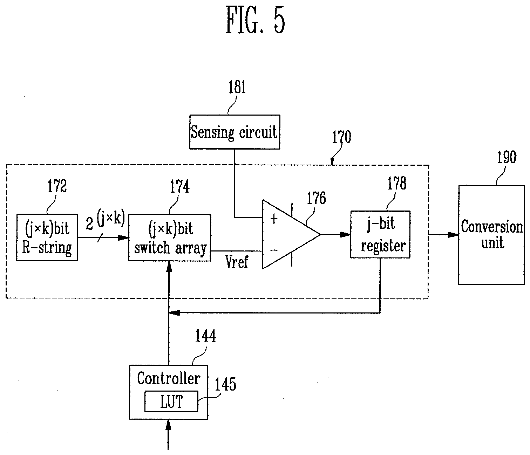

FIG. 5 is a diagram schematically showing an internal configuration of a second ADC as shown in FIG. 2.

The second ADC 170 functions to convert the information of the degradation of the organic light emitting diode inputted from the sensing circuit 181, e.g., a voltage of the organic light emitting diode into a digital value. However, this exemplary embodiment of the present invention is characterized in that the digital value is adjusted according to the control signal provided from the controller 144 so as to reflect that the voltage of the organic light emitting diode is varied due to the changes in temperature.

For this purpose, the second ADC 170 includes a (j*k) bit resistor string of ((j*k) bit R-string) 172, a (j*k) bit switch array 174, a comparator 176, and a (j*k) bit register 178. Here, the (j*k) bit switch array 174 selects some region out of the resistor string 172 by the control signal supplied from the controller 144, and provides information on a predetermined reference voltage (Vref) that corresponds to the temperature measured in the temperature sensor 140. The comparator 176 receives the information on the reference voltage outputted by the switch array 174 and information on the degradation of the organic light emitting diode outputted from the sensing circuit 181, e.g., a voltage of the organic light emitting diode, and compares capacities of the received information to output a predetermined digital bit value. Also, the bit values outputted from the comparator 176 are sequentially stored in the j bit register 178.

For example, an operation of the second ADC 170 will be described in more detail, on the assumption that a parameter j is 8 and a parameter k is 5.

When the parameter j is 8 degradation information of the organic light emitting diode is converted into an 8bit digital value, and when the parameter k is 5, five different reference values for the temperature measured in the temperature sensor 140 are provided.

Therefore, this exemplary embodiment of the present invention is characterized in that, when the degradation information of the organic light emitting diode is converted into the 8 bit digital value, the second ADC 170 selects one of the five reference values based on the temperature measured by the temperature sensor so as to reflect the degradation information affected by the temperature.

That is, the second ADC 170 selects some region of the resistor string 172 by one of the five reference values based on the temperature measured by the temperature sensor, and provides the information on the predetermined reference voltage (Vref) corresponding to the measured temperature. The second ADC 170 receives the information of the reference voltage and the information on the degradation of the organic light emitting diode outputted from the sensing circuit 181, e.g., a voltage of the organic light emitting diode, compares capacities of the received information generates an 8bit digital bit value, and stores the generated 8bit digital bit value.

In this case, the second ADC 170 according to one exemplary embodiment of the present invention includes an (8*5) bit resistor string 172 so as to generate an 8bit digital bit value, depending on the five different reference values according to temperature. An (8*5) bit switch array 174 selects some region of the resistor string 172 through the control signal provided from the controller 144, and provides information on the predetermined reference voltage (Vref) corresponding to the temperature measured in the temperature sensor 140.

As described above, to provide the information on the reference voltage (Vref) corresponding to the measured temperature is to select some region of the resistor string 172 corresponding to the reference voltage through the switch array 174. When some region of the resistor string is selected, the corresponding information of the reference voltage is provided by the selected resistor string.

As described above, the information of the reference voltage outputted by the switch array 174 is inputted into the comparator 176 together with the information of the degradation of the organic light emitting diode, e.g., a voltage of the organic light emitting diode output from the sensing circuit 181. Capacities of the information of the reference voltage and the voltage of the organic light emitting diode, both of which are input into the comparator 176, are compared by the comparator 176, and then output as an 8 bit digital bit value.

At this time, the output 8 bit digital value becomes a digital value corresponding to the information of the degradation of the organic light emitting diode that varies according to the temperature.

As described above, the 8 bit digital values outputted from the comparator 176 are sequentially stored in the 8 bit register 178, and the stored digital value is provided to the conversion unit 190.

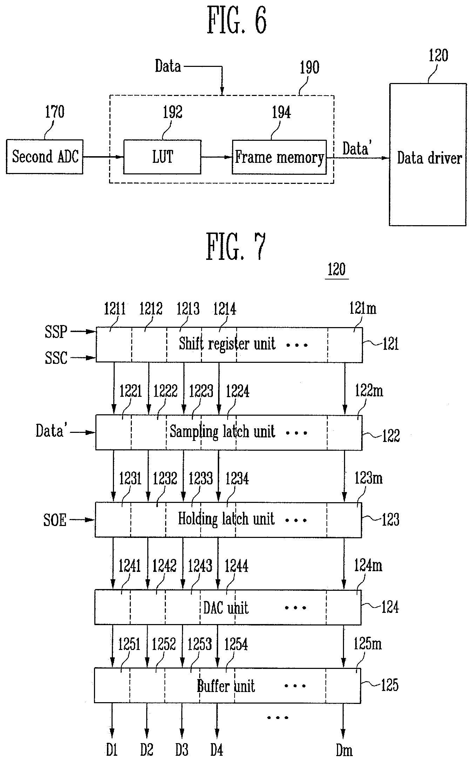

FIG. 6 is a diagram schematically showing an internal configuration of a conversion unit shown in FIG. 2.

The conversion unit 190 converts input data (Data) from the timing controller 150 into correction data (Data') so as to display an image with uniform luminance regardless of the changes in the degradation level of the organic light emitting diodes due to changes in temperature. This is done by using the digital value output from the second ADC 170, e.g., the digital value corresponding to the information on the degradation of the organic light emitting diode that reflects the changes in temperature. Here, the correction data (Data') converted in the conversion unit 190 is supplied to the data driver 120, and finally supplied to each of the pixels 140 in the panel.

More particularly referring to FIG. 6, the conversion unit 190 includes a look-up table (LUT) 192 and a frame memory 194.

Here, the look-up table (LUT) 192 is addressed by a signal output from the second ADC 170 to generate a certain corrected value. The corrected value generated in the look-up table 192 is stored in the frame memory 194.

That is, the conversion unit 190 receives a digital value output from the second ADC 170, and converts an input data (Data) into a correction data (Data') through the look-up table 192 and the frame memory 194 so as to display an image with uniform luminance regardless of the degradation level of the organic light emitting diodes provided in each of the pixels. The correction data (Data') converted in the conversion unit 190 is supplied to the data driver 120, and finally supplied to the data driver 120.

FIG. 7 is a block diagram showing one exemplary embodiment of the data driver shown in FIG. 2.

Referring to FIG. 7, the data driver 120 includes a shift register unit 121, a sampling latch unit 122, a holding latch unit 123, a DAC unit 124, and a buffer unit 125.

The shift register unit 121 receives a source start pulse (SSP) and a source shift clock (SSC) from the timing controller 150. The shift register unit 121 receiving the source shift clock (SSC) and the source start pulse (SSP) sequentially generates an m-numbered sampling signal while shifting a source start pulse (SSP) in every one cycle of the source shift clock (SSC). For this purpose, the shift register unit 121 includes m-numbered shift registers (1211 to 121m).

The sampling latch unit 122 sequentially stores the correction data (Data') in response to the sampling signal sequentially supplied from the shift register unit 121. For this purpose, the sampling latch unit 122 includes m-numbered sampling latch 1221 to 122m so as to store m-numbered correction data (Data').

The holding latch unit 123 receives a source output enable (SOE) signal from the timing controller 150. The holding latch unit 123 receiving the source output enable (SOE) signal receives a correction data (Data') from the sampling latch unit 122, and stores the received correction data (Data'). The holding latch unit 123 supplies the correction data (Data') stored in the holding latch unit 123 to the DAC unit 124. For this purpose, the holding latch unit 123 includes m-numbered holding latches 1231 to 123m.

The DAC unit 124 receives the correction data (Data') from the holding latch unit 123, and generates m-numbered data signals to correspond to the received correction data (Data'). For this purpose, the DAC unit 124 includes m-numbered digital/analog converters (DAC) 1241 to 124m. The DAC unit 124 generates m-numbered data signals using the DACs 1241 to 124m arranged in every channel, and supplies the generated data signals into the buffer unit 125.

The buffer unit 125 supplies the m-numbered data signals supplied from the DAC unit 124 into each of the m-numbered data lines (D1 to Dm). For this purpose, the buffer unit 125 includes m-numbered buffers 1251 to 125m.

According to the exemplary embodiment of the present invention described above, the organic light emitting display of the present invention may display an image having uniform luminance regardless of the changes in the degradation level of the organic light emitting diode due to changes in temperature.

While an aspect of the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. An organic light emitting display comprising:
a pixel unit (132) including a plurality of pixels, each pixel including an organic light emitting diode;
a temperature sensor (140) for measuring a temperature of the pixel unit;
a first analog/digital converter ADC (142) for converting temperature information from the temperature sensor into a first digital value;
a controller (144) for receiving the first digital value output from the first ADC and outputting a control signal corresponding to the received first digital value;
a sensing unit (180) for extracting information relating to a degradation level of an organic light emitting diode included in each of the pixels, wherein the sensing unit includes a sensing circuit (181), wherein the sensing circuit comprises:
a first current source unit (183) to supply a predetermined electric current into the organic light emitting diode in the pixel via a switching element (SW1) provided between the current source unit and the data lines corresponding to the pixel, so as to obtain a voltage of the light emitting diode;
a second analog/digital converter ADC (170) for receiving the voltage of the light emitting diode and the control signal and for accordingly generating a second digital value corresponding to the degradation level information and the temperature of the pixel unit; **characterised in that** the organic light emitting display further comprises
a conversion unit (190) for converting input video data into correction video data so as to display an image having substantially uniform luminance regardless of the degradation level of the organic light emitting diode and the temperature of the pixel unit, by using the second digital value output from the second ADC; and
a data driver (120) for receiving the correction video data output from the conversion unit and for generating video data signals to be supplied to the pixel unit,
wherein the second ADC (170) comprises:
a (j*k) bit resistor string (172);
a (j*k) bit switch array (174) to select some region from the resistor string through the control signal supplied from the controller and to output information on a predetermined reference voltage (Vref) corresponding to the temperature measured in the temperature sensor;
a comparator (176) to receive information on the reference voltage output by the switch array and information on the degradation level of the organic light emitting diode output from the sensing unit, and to compare the received information on the reference voltage and the information on the degradation level of the organic light emitting diode to output a predetermined digital bit value; and
a j bit register (178) to sequentially store a bit value output from the comparator,
wherein parameter "j" represents the number of digital bits of the digital value corresponding to the degradation level information output by the second ADC (170), and parameter "k" represents the number of different possible reference values for the temperature measured by the temperature sensor.

2. The organic light emitting display according to claim 1, wherein the predetermined electric current has a value (Imax) of an electric current that flows in the organic light emitting diode (OLED) when the pixel is allowed to emit the light with the maximum luminance.

3. A method of driving an organic light emitting display according to claim 1 or claim 2, the method comprising the steps of:
obtaining temperature information of a pixel unit including a plurality of pixels;
converting the temperature information into a first digital value;
outputting a control signal corresponding to the first digital value;
obtaining degradation information of an organic light emitting diode included in each of the pixels, wherein obtaining degradation information comprises:
supplying a first electric current to the organic light emitting diode included in each of the pixels; and
measuring a first voltage generated in the organic light emitting diode through the application of the first electric current;
converting the first voltage into a second digital value using the control signal;
converting input video data (Data) into correction video data (Data') using the second digital data value; and
generating video data signals to be supplied to the pixels using the correction video data (Data').

## Patentansprüche

1. Organische lichtemittierende Anzeige, umfassend:
eine Pixeleinheit (132), die eine Mehrzahl von Pixeln beinhaltet, wobei jedes Pixel eine organische lichtemittierende Diode beinhaltet;
einen Temperatursensor (140) zum Messen einer Temperatur der Pixeleinheit;
einen ersten Analog-Digital-Wandler, ADC, (142) zum Umwandeln von Temperaturinformationen von dem Temperatursensor in einen ersten digitalen Wert;
eine Steuerung (144) zum Empfangen des von dem ersten ADC ausgegebenen ersten digitalen Werts und Ausgeben eines dem empfangenen ersten digitalen Wert entsprechenden Steuersignals;
eine Abtasteinheit (180) zum Extrahieren von Informationen über einen Verschlechterungsgrad einer in jedem der Pixel enthaltenen organischen lichtemittierenden Diode, wobei die Abtasteinheit eine Abtastschaltung (181) beinhaltet, wobei die Abtastschaltung Folgendes umfasst:
eine erste Stromquelleneinheit (183), um über ein Schaltelement (SW₁), das zwischen der Stromquelleneinheit und den dem Pixel entsprechenden Datenzeilen bereitgestellt ist, einen vorbestimmten elektrischen Strom in die organische lichtemittierende Diode in dem Pixel bereitzustellen, um eine Spannung der lichtemittierenden Diode zu erhalten;
einen zweiten Analog-Digital-Wandler, ADC, (170) zum Empfangen der Spannung der lichtemittierenden Diode und des Steuersignals und zum entsprechenden Erzeugen eines den Verschlechterungsgradinformationen und der Temperatur der Pixeleinheit entsprechenden zweiten digitalen Werts; **dadurch gekennzeichnet, dass** die organische lichtemittierende Anzeige ferner umfasst:
eine Umwandlungseinheit (190) zum Umwandeln eingegebener Videodaten in Korrekturvideodaten unter Nutzung des von dem zweiten ADC ausgegebenen zweiten digitalen Werts, um ein Bild anzuzeigen, das unabhängig vom Verschlechterungsgrad der organischen lichtemittierenden Diode und von der Temperatur der Pixeleinheit eine im Wesentlichen einheitliche Leuchtdichte aufweist; und
eine Datenansteuerung (120) zum Empfangen der von der Umwandlungseinheit ausgegebenen Korrekturvideodaten und zum Erzeugen von der Pixeleinheit bereitzustellenden Videodatensignalen,
wobei der zweite ADC (170) Folgendes umfasst:
eine (j*k)-Bit-Widerstandskette (172);
eine (j*k)-Bit-Schaltmatrix (174), um durch das von der Steuerung bereitgestellte Steuersignal einen Bereich aus der Widerstandskette auszuwählen und um Informationen über eine vorbestimmte, der im Temperatursensor gemessenen Temperatur entsprechende Referenzspannung (Vref) auszugeben;
einen Komparator (176), um von der Schaltmatrix ausgegebene Informationen über die Referenzspannung und von der Abtasteinheit ausgegebene Informationen über den Verschlechterungsgrad der organischen lichtemittierenden Diode zu empfangen und um die empfangenen Informationen über die Referenzspannung und die Informationen über den Verschlechterungsgrad der organischen lichtemittierenden Diode zu vergleichen, um einen vorbestimmten digitalen Bitwert auszugeben; und
ein j-Bit-Register (178), um einen von dem Komparator ausgegebenen Bitwert sequenziell zu speichern,
wobei der Parameter "j" die Anzahl digitaler Bits des digitalen Werts darstellt, die den von dem zweiten ADC (170) ausgegebenen Verschlechterungsgradinformationen entspricht, und der Parameter "k" die Anzahl verschiedener möglicher Referenzwerte für die durch den Temperatursensor gemessene Temperatur darstellt.

2. Organische lichtemittierende Anzeige nach Anspruch 1, wobei der vorbestimmte elektrischen Strom einen Wert (Imax) eines elektrischen Stroms aufweist, der in der organischen lichtemittierenden Diode (OLED) fließt, wenn das Pixel das Light mit der maximalen Leuchtdichte emittieren kann.

3. Verfahren zur Ansteuerung einer organischen lichtemittierenden Anzeige nach Anspruch 1 oder Anspruch 2, wobei das Verfahren die folgenden Schritte umfasst:
Erhalten von Temperaturinformationen einer eine Mehrzahl von Pixeln beinhaltenden Pixeleinheit;
Umwandeln der Temperaturinformationen in einen ersten digitalen Wert;
Ausgeben eines dem ersten digitalen Wert entsprechenden Steuersignals;
Erhalten von Verschlechterungsinformationen einer in jedem der Pixel enthaltenen organischen lichtemittierenden Diode, wobei das Erhalten der Verschlechterungsinformationen Folgendes umfasst:
Bereitstellen eines ersten elektrischen Stroms an die in jedem der Pixel enthaltene organische lichtemittierende Diode; und
Messen einer in der organischen lichtemittierenden Diode durch die Anlegung des ersten elektrischen Stroms erzeugten ersten Spannung;
Umwandeln der ersten Spannung in einen zweiten digitalen Wert unter Nutzung des Steuersignals;
Umwandeln eingegebener Videodaten (Data) in Korrekturvideodaten (Data') unter Nutzung des zweiten digitalen Datenwerts; und
Erzeugen von den Pixeln bereitzustellenden Videodatensignalen unter Nutzung der Korrekturvideodaten (Data').

## Revendications

1. Afficheur électroluminescent organique comprenant :
une unité de pixels (132) comprenant une pluralité de pixels, chaque pixel comprenant une diode électroluminescente organique ;
un capteur de température (140) pour mesurer une température de l'unité de pixels ;
un premier convertisseur analogique-numérique ADC (142) pour convertir les informations de température provenant du capteur de température en une première valeur numérique ;
un contrôleur (144) pour recevoir la première valeur numérique sortie du premier convertisseur ADC et pour sortir un signal de commande correspondant à la première valeur numérique reçue ;
une unité de détection (180) pour extraire des informations relatives à un niveau de dégradation d'une diode électroluminescente organique incluse dans chacun des pixels, l'unité de détection comprenant un circuit de détection (181), le circuit de détection comprenant :
une première unité de source de courant (183) pour fournir un courant électrique prédéterminé dans la diode électroluminescente organique dans le pixel par l'intermédiaire d'un élément de commutation (SW₁) prévu entre l'unité de source de courant et les lignes de données correspondant au pixel, de manière à obtenir une tension de la diode électroluminescente ;
un deuxième convertisseur analogique-numérique, ADC, (170) pour recevoir la tension de la diode électroluminescente et le signal de commande et pour générer en conséquence une deuxième valeur numérique correspondant aux informations de niveau de dégradation et à la température de l'unité de pixels ;
l'afficheur électroluminescent organique étant **caractérisé en ce qu'**il comprend en outre :
une unité de conversion (190) pour convertir des données vidéo d'entrée en des données vidéo de correction de manière à afficher une image ayant une luminance sensiblement uniforme indépendamment du niveau de dégradation de la diode électroluminescente organique et de la température de l'unité de pixels, en utilisant la deuxième valeur numérique sortie du deuxième convertisseur ADC ; et
un dispositif de commande de données (120) pour recevoir les données vidéo de correction sortie de l'unité de conversion et pour générer des signaux de données vidéo à délivrer à l'unité de pixels,
dans lequel le deuxième convertisseur ADC (170) comprend :
une chaîne de résistances de (j*k) bits (172) ;
un réseau de commutateurs de (j*k) bits (174) pour sélectionner une certaine région de la chaîne de résistances par l'intermédiaire du signal de commande délivré par le contrôleur et pour sortir des informations concernant une tension de référence (Vref) prédéterminée correspondant à la température mesurée dans le capteur de température ;
un comparateur (176) pour recevoir des informations concernant la tension de référence sortie par le réseau de commutateurs et des informations concernant le niveau de dégradation de la diode électroluminescente organique sorties par l'unité de détection, et pour comparer les informations reçues concernant la tension de référence et les informations concernant le niveau de dégradation de la diode électroluminescente organique pour sortir une valeur binaire numérique prédéterminée ; et
un registre de j bits (178) pour mémoriser séquentiellement une valeur binaire sortie du comparateur,
le paramètre « j » représentant le nombre de bits numériques de la valeur numérique correspondant aux informations de niveau de dégradation sorties par le deuxième convertisseur ADC (170), et le paramètre « k » représentant le nombre de valeurs de référence différentes possibles pour la température mesurée par le capteur de température.

2. Afficheur électroluminescent organique selon la revendication 1, dans lequel le courant électrique prédéterminé a une valeur (Imax) d'un courant électrique qui circule dans la diode électroluminescente organique (OLED) lorsque le pixel est autorisé à émettre de la lumière avec la luminance maximum.

3. Procédé de commande d'un afficheur électroluminescent organique selon la revendication 1 ou la revendication 2, le procédé comprenant les étapes :
d'obtention d'informations de température d'une unité de pixels comprenant une pluralité de pixels ;
de conversion des informations de température en une première valeur numérique ;
de sortie d'un signal de commande correspondant à la première valeur numérique ;
d'obtention d'informations de dégradation d'une diode électroluminescente organique incluse dans chacun des pixels, l'obtention d'informations de dégradation comprenant :
la fourniture d'un premier courant électrique à la diode électroluminescente organique incluse dans chacun des pixels ; et
la mesure d'une première tension générée dans la diode électroluminescente organique par l'application du premier courant électrique ;
la conversion de la première tension en une deuxième valeur numérique en utilisant le signal de commande ;
la conversion de données vidéo d'entrée (Data) en des données vidéo de correction (Data') en utilisant la deuxième valeur de données numériques ; et
la génération de signaux de données vidéo à délivrer aux pixels en utilisant les données vidéo de correction (Data').
